# EUROPÄISCHE PATENTSCHRIFT

(11) **EP 4 267 629 B1**
(45) Veröffentlichungstag und Bekanntmachung des Hinweises auf die Patenterteilung: **24.12.2025**
(21) Anmeldenummer: 21844722.5
(22) Anmeldetag: 23.12.2021
(51) Int. Cl.: C08B 31/00

(54) **VERFAHREN ZUR HERSTELLUNG VON DERIVATISIERTER STÄRKE**
PROCESS FOR THE PREPARATION OF DERIVATIZED STARCH
PROCEDE DE PREPARATION D'AMIDON DERIVATISE

(30) Priorität: 23.12.2020 AT 511412020
(43) Veröffentlichungstag der Anmeldung: 01.11.2023
(73) Patentinhaber: Mondi AG, 1030 Wien (AT)
(72) Erfinder: OLKKONEN, Tina, 00830 Helsinki (FI); SCHWAIGER, Elisabeth, 9431 St.Stefan (AT); STEINDL, Roman, 3910 Zwettl (AT)
(74) Vertreter: Cunow, Gerda
(86) Internationale Anmeldenummer: PCT/EP2021/087464
(87) Internationale Veröffentlichungsnummer: WO 2022/136629

(56) Entgegenhaltungen:
- EP-A1- 0 603 727
- GB-A- 777 058
- US-A- 3 051 700
- US-A- 3 725 386
- ZIA-UD-DIN ET AL: "Physical and chemical modification of starches: A review", CRITICAL REVIEWS IN FOOD SCIENCE AND NUTRITION, vol. 57, no. 12, 3 November 2015 (2015-11-03), USA, pages 2691 - 2705, XP055534336, ISSN: 1040-8398, DOI: 10.1080/10408398.2015.1087379

## Beschreibung

Die vorliegende Erfindung bezieht sich auf ein Verfahren zur Herstellung von in der Herstellung von Papier oder Pappe anwendbarer derivatisierter Stärke hoher Reinheit, bei welchem ein Stärke-Rohstoff wenigstens folgenden Schritten unterworfen wird: einer Reinigung, Aufschlämmung, Derivatisierung, Verkleisterung, einer pH-Wert Anpassung sowie Anwendung.

Stärken, und zwar sowohl kationische Stärke als auch anionische Stärke werden in der Papier- und Pappe-Industrie sowohl als Massestärke als auch als Oberflächenstärke sowie als Sprühstärke und Streichstärke verwendet, wobei je nach Einsatzzeitpunkt andere Eigenschaften des Papiers oder der Pappe durch den Stärkeeinsatz modifiziert werden. So dient die Massestärke beispielsweise als Hilfsmittel bei der Entwässerung, erhöht die Festigkeit des Papiers oder der Pappe und hilft weiterhin beispielsweise Leimungsmittel zu schützen oder Störstoffe zu beseitigen. Oberflächenstärken beeinflussen demgegenüber die Festigkeit und Steifigkeit des Papiers oder der Pappe und verbessern die Bedruckbarkeit der hergestellten Papier- oder Pappe-Produkte. Es ist auch bekannt, dass als Oberflächenstärken native Stärken ohne Ladung eingesetzt werden können.

Wesentlich für die in der Papier- oder Pappe-Industrie eingesetzte Stärke ist hierbei, dass sie im Wesentlichen frei von Verunreinigungen, wie z.B. Zellulosefasern, Schalenteilen, Fetten oder Proteinen ist, da diese Substanzen die durch den Einsatz der Stärke gewünschten positiven Effekte am Papier oder der Pappe massiv verringern können und insbesondere zu nicht reproduzierbaren Ergebnissen der Qualität des hergestellten Papiers oder der Pappe führen können. Um diese nachteiligen Effekte zu vermeiden, wird die in der Papier- oder Pappe-Industrie hauptsächlich eingesetzte aus Mais, Kartoffeln oder Weizen stammende Stärke vor der Substitution der Glukoseeinheiten auf dem Stärkemolekül einer Reinigung unterworfen, um die gegebenenfalls störenden Verunreinigungen und/oder Begleitstoffe soweit als möglich abzutrennen, wobei insbesondere die in der Stärke enthaltenen Fette und auch Proteine, aufgrund des bei der Reinigung vorliegenden pH-Werts, nur zu einem relativ geringen Teil, aus der nativen Stärke entfernbar sind. Nach dem Abtrennen der Verunreinigungen und/oder Begleitstoffe wird die Stärke entweder einer Derivatisierung, nämlich einer Kationisierung oder einer Anionisierung unterworfen, wobei der überwiegende Anteil der eingesetzten Stärken kationische Stärken sind, bei welcher Glukoseeinheiten beispielsweise durch quaternäre Amine oder dgl. substituiert werden, wodurch kationische, derivatisierte Stärken mit einem vorbestimmten Substitutionsgrad erhalten werden. Hierbei wird in der industriellen Stärkeproduktion für die Papier- und Pappe-Herstellung üblicherweise eine Mehrzahl von Stärkeprodukten angeboten, die sich in ihrem vom Hersteller vorgewählten Substitutionsgrad unterscheiden, welcher üblicherweise zwischen etwa 0,04 und 0,1 liegt. Um die derivatisierte Stärke in der Papier- und Pappe-Herstellung einsetzen zu können, muss diese in einem weiteren Schritt in Wasser löslich gemacht werden, wozu sie gekocht wird, worauf die erhaltene Stärke-Suspension bzw. -Lösung weiter auf die für den definitiven Einsatz gewünschte Konzentration verdünnt wird. Der Schritt des Kochens der Stärke kann hierbei entweder beim Stärkehersteller oder beim Endverbraucher durchgeführt werden.

Der EP 0 031 744 A2 ist ein Verfahren zur Herstellung von kationischem Stärkeäther zu entnehmen, bei welchem eine Reinigung nach der pH-Wert Einstellung vorgenommen wird.

Der WO 2006/007045 A1 ist ein Verfahren zur Derivatisierung von Stärke, insbesondere zur Herstellung von quervernetzter Stärke zu entnehmen, welches Verfahren jedoch nach der Derivatisierung einen Reinigungsschritt nicht vorsieht.

Aus der EP 0 233 336 B1 ist ein Verfahren zur Trockenkationisierung von Stärke bekannt geworden, bei welchem Stärke mit Alkylidenepoxiden in Gegenwart eines pulverförmigen Gemisches aus einem Calciumhydroxid oder -oxid und Kieselsäure umgesetzt wird.

Aus der US-PS 5,368,690 ist ein Verfahren zur Papierherstellung zu entnehmen, bei welchem vernetzte, kationisierte Stärke unter Überdruck verkleistert wird. Die Stärke wurde in diesem Verfahren durch Aufschlämmen in Wasser und Zusatz von Natriumhydroxid sowie (3-Chlor-2-hydroxypropyl)trimethylammoniumchlorid und Epichlorhydrin nass kationisiert und nach einem Neutralisieren und Waschen mit Wasser getrocknet. Die getrocknete Stärke wird anschließend durch Aufschlämmen der Stärke in Wasser bis zur gewünschten Viskosität gekocht.

Nachteilig bei dieser Vorgangsweise ist einerseits, dass nicht ein beliebiger Substitutionsgrad der Stärke käuflich erwerbbar ist, da, wie festgehalten, nur gewisse häufig nachgefragte substituierte Stärken produziert werden und dass entweder große Mengen an derivatisierter, verkleisterter Stärkelösung zum Endkunden transportiert werden müssen oder aber ein energieaufwändiger Trockenschritt vorgenommen werden muss, um nicht unnötige Flüssigkeitsmengen transportieren zu müssen. In einem derartigen Fall werden üblicherweise die derivatisierten Stärkekörner abfiltriert, gewaschen und getrocknet und als derivatisiertes, jedoch nicht verkleistertes Pulver zum Endkunden transportiert. Jedenfalls enthalten derartige Stärkeprodukte nach wie vor nicht vernachlässigbare Anteile an Störstoffen, wie beispielsweise Proteinen, welche bei dem Reinigungsschritt nicht oder nur teilweise entfernt werden können und somit als störender Begleitstoff in der in der Papier- oder Pappe-Herstellung eingesetzten, derivatisierten Stärke enthalten ist.

Es wurde in letzter Zeit bereits angedacht, die Stärkeaufbereitung direkt vor Ort in der Papier- oder Pappe-Herstellung durchzuführen, wodurch eine Energieeinsparung erzielt werden kann und auch ein von dem jeweiligen Hersteller gewünschter Substitutionsgrad der derivatisierten Stärke bereitgestellt werden kann. Nicht gelöst werden konnte bis dato das Problem der Verunreinigung des Produktes mit Proteinen und Reaktionsnebenprodukten und zwar unabhängig davon, welches der zwei gängigen Derivatisierungsverfahren, Trocken- oder Nass-Derivatisierung für die native Stärke eingesetzt wird.

Die vorliegende Erfindung zielt somit darauf ab ein Verfahren bereitzustellen, mit welchem es gelingt, störende Verunreinigungen und/oder Begleitstoffe aus einer derivatisierten Stärke abzutrennen und weiterhin den Energieaufwand und Rohstoff- bzw. Chemikalieneinsatz in einem derartigen Verfahren zu minimieren.

Zur Lösung dieser Aufgabe ist das erfindungsgemäße Verfahren im Wesentlichen dadurch gekennzeichnet, dass eine nach den in einer beliebigen Abfolge ausgeführten Verfahrensschritten der Aufschlämmung und Derivatisierung erhaltene Aufschlämmung der derivatisierten Stärke der Reinigung durch Waschen und Konzentrieren in einer Vorrichtung gewählt aus einem Dekanter, Hydrozklon oder Separatoren bei einem alkalischen pH-Wert unterworfen wird und dass die nach der Verkleisterung erhaltene gereinigte und verkleisterte, derivatisierte Stärke einem wenigstens einmaligen Versetzen mit verdünnter Säure unterzogen wird. Indem die Verfahrensführung so gewählt wird, dass die Reinigung der Stärke erst nach den in einer beliebigen Abfolge ausgeführten Verfahrensschritten des Aufschlämmens und Derivatisierens der nativen Stärke bzw. des Stärke-Rohstoffs durchgeführt wird, gelingt es in überraschender Weise, eine bedeutend höhere Reinheit des derivatisierten Stärkeprodukts zu erreichen als wenn der Reinigungsschritt unmittelbar an dem Stärke-Rohstoff oder nach der Säurebehandlung durchgeführt wird. Insbesondere gelingt es bei einem derartigen Reinigungsschritt, in dem Stärke-Rohstoff enthaltene Proteine nahezu vollständig abzutrennen ebenso wie Fasern, Schalenteile und dgl. Weiterhin werden bei einer derartigen Verfahrensführung zusätzlich zu den aus dem Stärke-Rohstoff bzw. der nativen Stärke stammenden Verunreinigungen bei der Derivatisierung verwendete Chemikalien, insbesondere deren Überschüsse abgezogen, wodurch insgesamt der Verunreinigungsgehalt der derivatisierten Stärke, die in einer nachfolgenden Verkleisterung eingesetzt wird, gegenüber herkömmlichen Verfahren deutlich herabgesetzt ist. Zusätzlich können verunreinigende Materialien wie beispielsweise Reaktionsnebenprodukte, Reagenzien, niedermolekulare Stärkeabbauprodukte, jedoch auch Salze, wie Natriumsalze und selbstverständlich Wasser in dem Reinigungsschritt aus der Stärke-Suspension abgetrennt werden.

Gemäß der Erfindung wird der Reinigungsschritt so geführt, dass die Aufschlämmung aus derivatisierter Stärke durch Waschen und Konzentrieren in einer Vorrichtung gewählt aus einem Dekanter, Hydrozyklon oder Separatoren bei einem alkalischen pH-Wert durchgeführt wird. Indem der Reinigungsschritt durch Waschen und nachfolgendes Konzentrieren in einer Vorrichtung gewählt aus einem Dekanter, Hydrozyklon oder Separatoren, im alkalischen Bereich gereinigt wird, wodurch in ein und derselben Vorrichtung in einem ersten Schritt durch Zugabe von einer Waschsubstanz, insbesondere Wasser, wasserlösliche Salze wie Natriumsalze, wasserlösliche Reaktionsnebenprodukte, wie Glykole, jedoch auch niedermolekulare wasserlösliche Stärkeabbauprodukte, Restreagenzien und sämtliche weiteren wasserlöslichen Substanzen aus der Stärke entfernt werden können, wodurch die Belastung an die nachfolgende Verkleisterung gegebenenfalls störenden Substanzen deutlich verringert wird. In einem weiteren Schritt, wie beispielsweise einem Dekantierschritt oder einer weiteren Reinigung des vorgereinigten Materials in einem Hydrozyklon können aus dem Stärke-Rohstoff stammende Restverunreinigungen, wie Schalenteile, Fasern und dgl. abgetrennt werden, so dass durch die Verfahrensführung, bei welcher zuerst derivatisiert und dann gereinigt wird, der Verunreinigungsgrad der derivatisierten Stärke gegenüber herkömmlichen Verfahren stark herabgesetzt werden kann. Durch Wahl der speziellen Reinigungsvorrichtungen, wie einem Dekanter, Hydrozyklon oder von Separatoren kann dieser Reinigungseffekt noch weiter verbessert werden. Indem weiterhin die Reinigung der Aufschlämmung aus derivatisierter Stärke in wenigstens zwei Schritten durchgeführt wird, nämlich einem ersten alkalischen Waschschritt und einem zweiten Schritt des Waschens und Konzentrierens der Aufschlämmung, gelingt es noch weitere Verunreinigungen aus der Aufschlämmung aus derivatisierter Stärke abzutrennen, insbesondere Substanzen wie Fasern und Proteine, die besonders gut alkalisch ausgewaschen werden können. Darüber hinaus gelingt es mit einer derartigen Verfahrensführung den pH-Wert der Stärkesuspension auf einem optimalen basischen Bereich zu halten, wodurch nicht nur eine vorzeitige Verkleisterung in einem Waschschritt vermieden werden kann sondern vor allem in dem nachfolgenden Verkleisterungsschritt eine effizientere Verkleisterung erreicht werden kann, da, wie dies dem Fachmann bekannt ist, alkalische Stärke bedeutend besser kochbar ist als neutrale Stärke oder sogar leichte saure Stärke. Jedenfalls gelingt es mit einer derartigen Verfahrensführung eine bessere Quellung der Stärke zu erreichen, wodurch insgesamt ein bedeutend hochwertigeres und insbesondere ein Produkt besonders hoher Reinheit erhalten werden kann.

Im Zusammenhang mit der vorliegenden Erfindung wird als Stärke-Rohstoff jede pflanzliche Stärke bzw. native pflanzliche Stärke verstanden, die ohne jede Vorreinigung in dem Verfahren gemäß der vorliegenden Erfindung eingesetzt werden kann. Ein derartiges Produkt enthält neben der für die Reaktion erforderlichen Stärke noch nicht unbeträchtliche Mengen an Fasern, Schalenteilen der Pflanzen, Proteine und dgl. Als Stärke-Rohstoff können im vorliegenden Verfahren nicht nur Kartoffelstärke und/oder Maisstärke eingesetzt werden, sondern auch beispielsweise Tapiokastärke, Wachsmaisstärke, Weizenstärke, Gerstenstärke, Reisstärke, Fruchtstärke und dgl. mehr.

Unter Stärke hoher Reinheit wird eine Stärke verstanden, deren nicht Stärke-gebundener Stickstoffgehalt in Bezug auf jenen des Ausgangsmaterials um wenigstens 60 % vorzugsweise wenigstens 75 %, besonders bevorzugt wenigstens 90 % verringert ist. Der Stickstoffgehalt wird hier als Menge des Gesamtstickstoffs in der derivatisierten Stärke verstanden, d.h. sowohl Stickstoff der aus der Stärke selbst stammt, wie den darin enthaltenen Proteinstickstoff als auch Stickstoff, der mit den Derivatisierungsreagenzien und/oder Aktivatoren oder dgl. während der Derivatisierung eingebracht wurde bzw. ggf. aus Reaktionsprodukten der Derivatisierung stammt.

Als derivatisierte Stärke wird im Zusammenhang mit der vorliegenden Anmeldung eine Stärke verstanden, bei welcher Glukoseeinheiten auf der Stärke durch entweder kationische, anionische aber auch sowohl kationische als auch anionische Reste substituiert wurden. Bei einer derartige Derivatisierung erhaltene derivatisierte Stärken werden in der Folge in Abhängigkeit von der gewählten Derivatisierung und der ionischen Ladung der bei der Derivatisierung eingeführten Reste als kationische, anionische oder auch biionische bzw. amphotere Stärken bezeichnet.

Um den pH-Wert nicht zu stark im basischen Bereich zu belassen, wird gemäß einer Weiterbildung der Erfindung der zweite Schritt des Waschens in dem Reinigungsschritt unter Zusatz von wenigstens einer Säure gewählt aus Mineralsäuren, wie z.B. Salzsäure, Schwefelsäure oder Phosphorsäure oder organischen Säuren wie z.B. Fumarsäure oder Zitronensäure bei gleichzeitiger Einstellung des pH-Werts auf Werte zwischen 7 und 9 durchgeführt. Mit einer derartigen Verfahrensführung gelingt es, den für die nachfolgende Verkleisterung optimalen pH-Wert während des Waschens der derivatisierten Stärke einzustellen, um nachfolgend eine möglichst vollständige und insbesondere rasche Verkleisterung erzielen zu können. In dem oben angeführten Reinigungsschritt können sämtliche einem Fachmann auf dem Gebiet der Stärke-Derivatisierung bekannten Säuren entweder alleine oder in Kombination eingesetzt werden. Wesentlich ist nur das Faktum, dass die Reinigung nach der Derivatisierung und vor dem Kochen bzw. der Verkleisterung, vorzugsweise noch bei einem alkalischen pH-Wert durchgeführt wird.

Indem, wie dies einer Weiterbildung entspricht, in dem Reinigungsschritt die Aufschlämmung aus derivatisierter Stärke in der Reinigung auf einen Feststoffgehalt von 2 bis 42 Gew.-%, insbesondere 5 bis 35 Gew.-% konzentriert wird, gelingt es, eine für die nachfolgende Verkleisterung bzw. das nachfolgende Kochen konzentrierte Stärkeaufschlämmung zu erhalten, mit welcher unmittelbar ohne weitere Zugabe von Feuchtigkeit die Verkleisterung durchgeführt werden kann. Dadurch, dass in der Verfahrensführung gemäß der Erfindung jeglicher Trockenschritt unterbleibt, wird eine wesentliche Einsparung an Energie erzielt bei gleichzeitigem Erhalt eines hochgereinigten unmittelbar in der Papierherstellung beispielsweise als Massenstärke oder als Oberflächenstärke, wie z.B. als Leimungsmittel einsetzbares Produkt zu erhalten. Indem das Verfahren so geführt wird, dass jeglicher Trocknungsschritt unterbleibt, kann darüber hinaus verhindert werden, dass Verunreinigungen, wie Proteine, welche bei einer Trocknung aufgrund der dabei stattfindenden Denaturierung, in Wasser unlöslich werden und sich an den Stärkekörnern anlagern bzw. daran festlegen, in das nachfolgende Kochen und in der Folge in der für einen Einsatz aufbereiteten Stärke verbleiben. Für den tatsächlichen Einsatz des Produkts muss die Stärkelösung in der Folge auf die gewünschte Konzentration verdünnt und auf den gewünschten pH-Wert eingestellt werden. Dadurch, dass ein Trocknungsschritt unterbleiben kann wird weiterhin sichergestellt, dass keinerlei mögliche oberflächliche Verhornung der Stärkekörner der derivatisierten Stärke auftreten kann, was zu einem Effizienzverlust der derivatisierten Stärke in der Anwendung bei der Herstellung von Papier oder Karton führen kann.

Für das Einstellen des gewünschten pH-Werts nach der Verkleisterung, wird gemäß einer Weiterbildung das erfindungsgemäße Verfahren im Wesentlichen so geführt, dass die nach der Verkleisterung erhaltene gereinigte und verkleisterte, derivatisierte Stärke einem zweistufigen Ansäuern unterworfen wird. Mit einer derartigen Verfahrensführung gelingt es, den pH-Wert der verkleisterten Stärke in einem ersten Ansäuerungsschritt auf beispielsweise Werte von 6,0 bis etwa 8,5 einzustellen, einem pH-Wert, bei welchem verkleisterte Stärke über längere Zeit ohne Verschlechterung gelagert werden kann. Eine Lagerung der verkleisterten Stärke kann hierbei aus verschiedenen Gründen erforderlich sein, die beispielsweise eine Vorausproduktion von größeren Mengen an verkleisterter Stärke oder erforderliche Reparaturen oder Wartungsarbeiten an der Papiermaschine bei einer kontinuierlichen Produktion von verkleisterter Stärke umfassen können. In einem zweiten Ansäuerungsschritt kann die vorangesäuerte oder im Wesentlichen neutrale derivatisierte und verkleisterte Stärke dann auf den optimalen pH-Wert für den speziellen Einsatzzweck auf der Papiermaschine angepasst werden. So sind beispielsweise für Leimungs-Anwendungen, wie beispielsweise mit Alkenylbernsteinsäureanhydrid-Anwendungen niedrigere pH-Werte günstiger als beispielsweise für einen Einsatz als Massenstärke. Wenn die verkleisterte Stärke als Massenstärke im Dickstoff angewandt wird kann das Verfahren so geführt werden, dass die Stärke auf einen niedrigeren pH-Wert eingestellt wird, wodurch das Absenken der in diesem Verfahrensschritt eingesetzten Zellstofffasermischung durch Zusatz von Aluminiumsulfat oder Schwefelsäure vermieden werden kann, da die pH-Werteinstellung allein durch die Massenstärke erfolgen kann. Mit einer derartigen Verfahrensführung gelingt somit nicht nur eine wesentliche Einsparung an Chemikalien, wie Aluminiumsulfat sondern es kann zusätzlich ein pH-Werteinstellschritt der Zellstofffasermischung unterbleiben. Dem Fachmann ist bekannt, dass Dickstoff einen Konsistenzbereich von 3 bis 35 Gew.-%, insbesondere 4 bis 30 Gew.-% umfassen kann. Mit einer derartigen Verfahrensführung können somit zwei für großtechnisch einzusetzende Verfahren wesentliche Vorteile erreicht werden, die verkleisterte, gereinigte Stärke ist sowohl für eine lange Zeit ohne Verschlechterung lagerbar und durch die zweistufige pH-Werteinstellung kann eine wesentliche Einsparung an Chemikalien erreicht werden.

Aufgrund der überwiegenden Bedeutung von kationisierter Stärke in der Papier- und Karton-Industrie wird gemäß einer Weiterbildung der Erfindung das Verfahren so geführt, dass als Derivatisierung eine Kationisierung mit einer Base gewählt aus der Gruppe der Alkalihydroxide, wie beispielsweise NaOH, KOH, LiOH, der Alkalikarbonate, wie beispielsweise Na₂CO₃ oder Erdalkalioxide, wie beispielsweise CaO oder der Erdalkalihydroxide, wie Ca(OH)₂, insbesondere NaOH, einem Kationisierungsreagenz, insbesondere 3-Chloro-2-hydroxy-propyl-trimethylammoniumchlorid oder einem epoxidischen Kationiserungsreagens wie 2,3 Epoxy-propyl-trimethylammoniumchlorid sowie gegebenenfalls weiteren Substitutionsreagenzien und fakultativen Hilfsstoffen gewählt aus Aktivatoren, wie Silikate, Kalziumoxid oder Kalziumhydroxid durchgeführt wird. Die kationische Derivatisierung kann entweder als Trockenkationisierung oder als Nasskationisierung durchgeführt werden, wobei im ersteren Fall zuerst eine Derivatisierung der trockenen Stärke unter alkalischen Bedingungen vorgenommen und in der Folge eine Aufschlämmung in angesäuertem Wasser durchgeführt wird und im zweiten Fall einer Nass-derivatisierung wird zuerst der Rohstoff, die Stärke, in Wasser versetzt mit Quellschutzsalzen, wie z.B. Natriumsulfat, Natriumchlorid, Kalziumchlorid und Alkalihydroxiden oder Erdalkalihydroxiden aufgeschlämmt und in der Folge mit einem Kationisierungsreagenz, wie beispielsweise 3-Chloro-2-hydroxy-propyl-trimethylammuniumchlorid oder 2,3 Epoxy-propyl-trimethyl-ammoniumchlorid bei pH-Werten von 11 bis 12 kationisiert. Die Verfahrensführung bezüglich pH-Werten, Temperaturen, Konzentrationen und Reaktionszeiten ist in beiden Fällen aus dem Stand der Technik bekannt, jedoch hat sich überraschender Weise gezeigt, dass sowohl eine trockenkationisierte Stärke als auch nasskationisierte Stärke bei einer nachfolgenden Reinigung bis zu einer bedeutend höheren Reinheit als eine mit einem herkömmlichen Verfahren derivatisierte Stärke gereinigt werden kann, wenn der Reinigungsschritt der Stärke nach der Kationisierung im alkalischen Bereich und nicht vorher vorgenommen wird.

Gemäß einer Weiterbildung der Erfindung wird das Verfahren so geführt, dass in der Kationisierung Natronlauge, insbesondere aus einer Zellstofferzeugung rezyklierte Natronlauge eingesetzt wird. Indem in der Kationisierung in diesem Fall als Kationisierungsmittel Natronlauge , insbesondere Recyclingnatronlauge, die aus der Zellstofferzeugung stammt, eingesetzt wird, wird einerseits der Chemikalienbedarf verringert und andererseits sichergestellt, dass die in der Papier- und Zellstofferzeugung immer vorhandene Natronlauge sinnvoll weiterverwertet werden kann. Überraschenderweise hat sich gezeigt, dass in Bezug auf die Verunreinigung der damit hergestellten kationisierten Stärke die nachfolgende Reinigung in der Lage ist, sämtliche Verunreinigungen, die mit der Recyclingbase gegebenenfalls eingetragen wurden, wieder aus diesem Produkt abzutrennen.

Als besonders günstig hat sich im Zusammenhang mit dem vorliegenden Verfahren erwiesen, dass die Kationisierung auf einen in der nachfolgenden Papier- oder Pappe-Herstellung erforderlichen Kationisierungsgrad zwischen 0,02 und 0,5, insbesondere einen Kationisierungsgrad zwischen 0,04 und 0,35 vorgenommen wird. Hierbei gelingt es, exakt den Erfordernissen der jeweiligen Papier- und Zellstoffherstellung Folge zu leisten und es ist nicht, wie bei käuflich erwerbbaren Stärken erforderlich, einen Kompromiss zwischen erhältlichen Substitutionsgraden und erforderlichen Substitutionsgraden der Stärke zu wählen, sondern die Substitution kann genau bis zu dem Punkt geführt werden, welche in der jeweiligen Papier- und Pappeherstellung erforderlich und besonders günstig ist. Dieser Vorteil wäre zwar theoretisch mit den Verfahren gemäß dem Stand der Technik erreichbar, ist jedoch in der Praxis insbesondere dann, wenn Stärke zugeliefert werden muss oder von einem Dritten gekauft werden muss, nicht realisierbar, da nur bestimmte Produkte identisch hergestellt werden und die Industrieproduktion nicht individualisierbar ist. Aus diesem Grund wird vorzugsweise eine On-Site-Verwendung des Verfahrens in einer Holzstoff-, Zellstoff-, Papier- oder Kartonfabrik vorgenommen, da dann exakt die erforderlichen Kationisierungs- oder Anionisierungs- bzw. Derivatisierungsgrade bereitgestellt werden können.

Schließlich hat sich herausgestellt, dass mit der erfindungsgemäßen Verfahrensführung überraschender Weise unterschiedlichste Stärke-Rohstoffe eingesetzt werden können, ohne dass es zu einer Verschlechterung der Verfahrensausbeute kommt. Aus diesem Grund ist das erfindungsgemäße Verfahren dahingehend weitergebildet, dass als Stärke-Rohstoff eine native Stärke gewählt aus Knollenstärke, wie Kartoffelstärke oder Tapiokastärke, Getreidestärke wie Maisstärke, Wachsmaisstärke, Weizenstärke, Gerstenstärke, Reisstärke oder Fruchtstärke, wie Stärke aus Hülsenfrüchten oder Mischungen von zwei oder mehreren davon eingesetzt wird. Zusätzlich zu üblicherweise in der Papier- und Pappeherstellung eingesetzten Stärken wie Kartoffelstärke, Maisstärke oder auch gegebenenfalls Weizenstärke können sämtliche weiteren stärkehaltigen Pflanzen als den Stärke-Rohstoff liefernde Ausgangsmaterialien herangezogen werden, da aufgrund der Möglichkeit, eine effiziente Reinigung nach der Derivatisierung durchzuführen, auch höhere Grade an Verunreinigungen, welche beispielsweise aus Getreidestärken stammen können, jederzeit beliebig abtrennbar sind.

Die Erfindung wird nachfolgend anhand von einer Zeichnung und Ausführungsbeispielen näher erläutert und insbesondere wird ein Vergleich der Verfahrensführung gemäß dem Stand der Technik und der Verfahrensführung gemäß der Erfindung gezeigt, woraus erkennbar ist, dass die mit dem Verfahren gemäß der Erfindung erhältliche derivatisierte Stärke eine bedeutend höhere Reinheit als die mit den Verfahren gemäß dem Stand der Technik erhältliche aufweist.

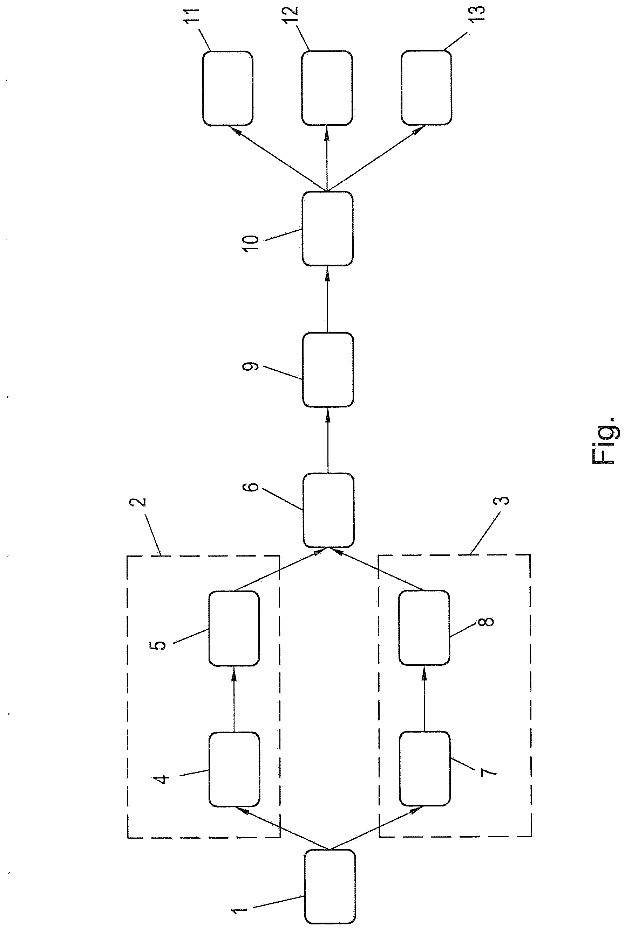

In der Zeichnung ist ein Flussdiagramm gezeigt, dass die möglichen Verfahrensabläufe zur Herstellung von derivatisierter Stärke gemäß der Erfindung darstellt.

In diesem Flussdiagramm ist mit 1 ein Stärkevorratssilo bezeichnet, in welchem eine beliebige, nicht vorab gereinigte Stärke gewählt aus einer Knollenstärke, wie Kartoffelstärke oder Tapiokastärke, eine Getreidestärke, wie Maisstärke, Weizenstärke, Gerstenstärke oder dgl. oder eine Fruchtstärke wie eine Stärke aus Hülsenfrüchten oder auch Mischungen davon vorrätig ist. Aus diesem Stärkevorratssilo 1 wird die Stärke entweder zu einer allgemein mit 2 bezeichneten Nassderivatisierung oder zu einer allgemein mit 3 bezeichneten Trockenderivatisierung weitergefördert. Hierbei wird bei der Nassderivatisierung 2 Stärke aus dem Stärkevorratssilo 1 mittels einer Förderschnecke in einen Aufschlämmbehälter 4 gefördert, in welchem sie mit Wasser zu einer Stärkesuspension, einer Stärkekonzentration von 30 bis 40 Gew.-% durch Rühren vermischt wird. Zu dieser Stärkesuspension wird ein Schutzsalz, beispielsweise Na₂SO₄ hinzugefügt und weiter gerührt. Entweder in dem Aufschlämmbehälter 4 selbst oder in einem gesonderten Derivatisierungsbehälter 5 wird in der Folge die Nassderivatisierung durchgeführt, indem ein Kationisierungsreagenz, wie beispielsweise 2,3 Epoxy-propyl-trimethyl-ammoniumchlorid, gegebenenfalls Aktivatoren oder weitere Substitutionsreagenzien, wie beispielsweise Salze für eine Phosphorisierung zugesetzt werden. Diese Mischung wird weiter für einen Zeitraum von etwa 20 Minuten gerührt und anschließend der pH-Wert durch Zugabe von 4 %-iger NaOH schrittweise auf einen pH-Wert von 11,8 erhöht und weiter gerührt. Um die Kationisierung zu vervollständigen wird die Temperatur auf etwa 40 °C erhöht und die Reaktionsmischung in der gesamten Umsetzungszeit durch gegebenenfalls erforderliches Zudosieren von Natronlauge auf einen pH-Wert von 11,8 gehalten. Nach Beendigung der Reaktion wird der pH-Wert der Reaktionsmischung durch Zugabe von verdünnter Mineralsäure, wie z.B. Salzsäure in einem Reinigungsschritt 6 auf einen pH-Wert von 9 abgesenkt und kurze Zeit gehalten.

Zur Abtrennung des überschüssigen Kationisierungsmittels, der Reaktionsnebenprodukte, der zugesetzten und entstandenen Salze sowie der gelösten Proteine und Rohstoffverunreinigungen wird die Suspension der kationisierten Stärke unter Zugabe von weiterem Wasser bei Einsatz eines Dekanters, Hydrozyklons oder Separatoren gereinigt. Der Reinigungsschritt kann gegebenenfalls ein zweites Mal oder mehrere Male durchgeführt werden, um verbliebene Verunreinigungen abzuziehen.

Die so hergestellte kationisierte Stärke kann, sofern dies erforderlich ist, bei einer Temperatur zwischen 4 und 25 °C, einen pH-Wert von 7,1 bis 9, der gegebenenfalls durch Zugabe von verdünnter Säure eingestellt wird, gelagert werden. Die Stärke hat hierbei eine Dichte zwischen 12° Beaume und 21° Beaumé bzw. 15 Gew.-% bis 39 Gew.-% Stärke in der Aufschlämmung. Selbstverständlich kann die Stärke auch ohne Lagerung unmittelbar weiterverarbeitet werden.

Eine alternative Methode ist die Trockenderivatisierung, welche gemäß Kreislauf 3 durchgeführt wird. Hierzu wird aus dem Stärkevorratssilo 1 nicht vorgereinigte Stärke mit einer Förderschnecke in den Mischreaktor 7 eingebracht, wo sie mit festem Kalziumhydroxid, einem Aktivator, wie z.B. Silikaten und dgl. versetzt wird und vermischt wird. Um die Derivatisierung durchzuführen, wird eine geringe Menge an Wasser und Natronlauge auf die trockene Stärkemischung aufgesprüht und gemischt, in der Folge das Kationisierungsmittel, wie 2,3 Epoxy-propyl-trimethyl-ammoniumchlorid aufgesprüht und vermischt und in der Folge schrittweise die Temperatur auf eine Reaktionstemperatur von 30 bis 80 °C erhöht und zur Vervollständigung der Umsetzung bei der Reaktionstemperatur für 24 Stunden bis 120 Stunden ruhen gelassen, um den gewünschten Substitutionsgrad der Stärke zu erreichen. Nachfolgend wird die kationisierte Stärke bei 8 mit verdünnter Mineralsäure aufgeschlämmt, bis der pH-Wert auf etwa 7 bis 10 abgesenkt wurde. Die so kationisierte Stärke wird dann wiederum in der Reinigung 6 zur Entfernung von überschüssigem Kationisierungsmittel, Reaktionsnebenprodukten, der zugesetzten und entstandenen Salze, Rohstoffverunreinigungen, gelösten Proteinen und dgl. zugeführt, indem Wasser zugefügt wurde und die Stärke mit dem Dekanter, Hydrozyklon oder Separatoren gereinigt wird. Nach dem Reinigungsschritt kann die Stärke gegebenenfalls gelagert werden oder unmittelbar der Verkleisterung zugeführt werden. Gelagert wird eine derartige kationisierte Stärke bei Temperaturen zwischen 4 °C und 25 °C, einem pH-Wert von 7,1 bis 9, welcher durch Zugabe von verdünnter Mineralsäure eingestellt wurde, einer Dichte zwischen 12° und 21° Beaumé bzw. 15 Gew.-% bis 39 Gew.-% Stärke in der Aufschlämmung.

Unmittelbar aus der Reinigung oder aus einem Lagertank wird in der Folge die kationisierte Stärke bei 9 einer Verkleisterung zugeführt, indem sie in einem Dampfinjektionskocher bei etwa 125 °C für 1 bis 20 Minuten mit einer Konzentration der Stärkesuspension in dem Kocher zwischen 4 Gew.-% und 38 Gew.-% gekocht wird.

Die so verkleisterte Stärke kann in der Folge entweder in einem Stapeltank 10 bei etwa 70 °C und einem pH-Wert von 7 bis 8,5, welcher durch Zugabe von verdünnter Mineralsäure erreicht wird, gelagert werden und in der Folge für den jeweiligen Einsatz in der Papier- und Zellstoffindustrie weiter verdünnt bzw. der pH-Wert eingestellt werden. In dem Stapeltank hat die verkleisterte Stärke eine Temperatur von etwa 70 °C, eine Konzentration von 3 bis 35 Gew.-% und einen pH-Wert zwischen 7 und 8,5.

In dem Stapeltank 10 kann die Stärke in der Folge in einem Alkenylbernsteinsäureanhydrid (ASA)-Verfahren 11 weiterverwendet werden, bei welchem die verkleisterte Stärke (1 bis 4 Gew.-%) auf einen pH-Wert von 2 bis 6,5, welcher durch Zugabe von verdünnter Säure, insbesondere Mineralsäure eingestellt wird. Eine weitere Einsatzmöglichkeit ist die Anwendung der verkleisterten Stärke als die Massestärke im Dickstoff, wie dies bei 12 angedeutet ist. Hierbei wird der Gehalt an verkleisterter Stärke in der Suspension 1 bis 4 Gew.-% betragen, der pH-Wert liegt wiederum zwischen 2 bis 6,5, der durch Zudosieren von verdünnter Mineralsäure eingestellt wird, welcher pH-Wert gegebenenfalls in Abhängigkeit von dem gewünschten pH-Wert des Papierzellstoff-Dickstoffs eingestellt werden kann. Die dritte Einsatzmöglichkeit ist die Anwendung der verkleisterten Stärke als Massenstärke im Dünnstoff, wie dies bei 13 angedeutet ist, wobei die Konzentration der Stärkesuspension im Wesentlichen gleich jener der ASA- bzw. der Dickstoffanwendung ist, der pH-Wert jedoch etwas höher, nämlich bei 5 bis 7 gewählt wird, welcher pH-Wert ebenfalls durch Einsatz von verdünnter Mineralsäure eingestellt wird.

Gegenüber dem herkömmlichen Verfahren zur Herstellung von derivatisierter, verkleisterter Stärke unterscheidet sich das erfindungsgemäße Verfahren in dem Reinigungsschritt, welcher nach der Derivatisierung vorgesehen wird, welcher Reinigungsschritt im Falle einer trockenkationisierten Stärke bis dato unbekannt war, da trockenkationisierte Stärke gemäß dem Stand der Technik ohne jede weitere Reinigung eingesetzt wird und welcher sich gegenüber nasskationisierter Stärke dadurch unterscheidet, dass nicht nur ein einfaches Spülen mit Wasser vorgenommen wird, sondern eine besonders gewählte Reinigungsvorrichtung, wie ein Hydrozyklon, Dekanter oder auch Separatoren eingesetzt wird, mit welcher es überraschenderweise gelingt, nicht nur die wasserlöslichen Störstoffe abzutrennen, sondern aufgrund der basischen Führung des Reinigungsschrittes sämtliche alkalisch löslichen Proteine, Stärkeverunreinigungen, Reaktionsnebenprodukte, wie beispielsweise Glykole, Restreagenzien, wie restliche Epoxide und auch niedermolekulare Stärkeabbauprodukte abzutrennen. Mit dieser Verfahrensführung gelingt es daher ausgehend von einem nicht vorgereinigten Stärkerohstoff eine derivatisierte Stärke hoher Reinheit zu erhalten, mit welcher in der Folge in der Verkleisterung eine bessere Quellung der Stärke erreicht wird, wodurch insgesamt ein hochwertigeres Produkt mit höherer Reinheit erhalten werden kann.

Das oben beschriebene Verfahren zur Herstellung von derivatisierter Stärke hoher Reinheit wird in der Folge unter Einsatz verschiedener vorab nicht gereinigter Ausgangsstärken mit den herkömmlichen Kationisierungsverfahren, und zwar sowohl Nass- als auch Trockenkationisierungsverfahren verglichen. Hierbei wurden für die Vergleichsversuche die Nass- und Trockenkationisierung wie in der Literatur beschrieben, durchgeführt. Bei der Trockenkationisierung wurde nach dem Kationisierungsverfahren das Reaktionsgemenge in einem Warmlufttrockner bei 50 °C vorgetrocknet und so lange Fumarsäure zugesetzt, bis eine 5 %-ige Suspension des erhaltenen Pulvers im Wasser bei einem pH von 5,5 erhalten wurde. Bei der Nasskationisierung gemäß dem Stand der Technik wurde ebenfalls, wie aus der Literatur bekannt, kationisiert und das erhaltene Reaktionsgemisch nach dem Reaktionsende mit verdünnter Salzsäure auf einen pH-Wert von 5,5 angesäuert, filtriert und zwei Mal mit Wasser nachgewaschen und der Filterkuchen im Warmlufttrockner bei 50 °C zu einem trockenen Pulver getrocknet.

Das Trockenkationisierungsverfahren bzw. Nasskationisierungsverfahren gemäß der Erfindung wurde, wie in dem Flussdiagramm gezeigt, durchgeführt, die Reinigung erfolgte bei der Nasskationisierung am Ende der Reaktion durch Zusatz von verdünnter Mineralsäure bis ein pH-Wert von 9 erreicht wurde und Aufkonzentrieren der Suspension in einem Hydrozyklon. Die so erhaltene konzentrierte Stärkesuspension wurde durch Zusatz von verdünnter Mineralsäure auf pH 7 eingestellt und in einem Warmlufttrockner bei 50 °C getrocknet, um eine Probe für die nachfolgende Analyse zu erhalten. Im Falle der Trockenkationisierung wurde nach Reaktionsende Wasser mit pH 8 zugegeben, bis eine Suspension einen Gehalt von 30 Gew.-% Stärke erhalten wurde, die Suspension wurde durch Zusatz von weiterer verdünnter Mineralsäure auf einen von pH 8 eingestellt, die Aufschlämmung in einem Hydrozyklon gereinigt und das so erhaltene Konzentrat wurde mit verdünnter Mineralsäure auf pH 7 eingestellt, abfiltriert und der erhaltene Filterkuchen in einem Warmlufttrockner bei 50 °C zu einem trockenen Pulver getrocknet, um eine Probe für die nachfolgende Analyse zu erhalten.

Die Versuche wurden mit Kartoffelstärke und Maisstärke durchgeführt und bei Überprüfung der Effizienz des erfindungsgemäßen Verfahrens wurde einerseits der Gesamtstickstoff nach der Aufreinigung nach Kjeldahl bestimmt, wobei % N nach der normierten Kjeldahlmethode die Summe an in der Probe vorhandenem Stickstoff ergibt, was den % Stickstoff die tatsächlich substituiert wurden + den % Stickstoff aus den Reaktionsnebenprodukten + den % Stickstoff aus den erhaltenen Proteinen entspricht.

Ein zweites Überprüfungskriterium betraf die unlöslichen Bestandteile in der Trockensubstanz. Hierbei wurden jeweils 100 g Probe nach saurer Hydrolyse in 600 ml 0,1 normaler Salzsäure bei 100 °C 30 Minuten reagieren gelassen und der unlösliche Rückstand wurde nach Filtration und zweimaligem Waschen mit destilliertem Wasser gravimetrisch bestimmt. Die Ergebnisse sind in der nachfolgenden Tabelle 1 gezeigt.

**Tabelle 1**

| Versuchsnummer | Stärketyp | Stand der Technik | Erfindung | % N der Trockensubstanz nach Kjeldahl | Unlösliches der Trockensubstanz |
|---|---|---|---|---|---|
| 1 | Kartoffelstärke 1 | Trockenverfahren | | 0,40 | 630 mg/kg |
| 2 | Kartoffelstärke 1 | | Trockenverfahren | 0,26 | 100 mg/kg |
| 3 | Maisstärke 1 | Trockenverfahren | | 0,37 | 570 mg/kg |
| 4 | Maisstärke 1 | | Trockenverfahren | 0,29 | 120 mg/kg |
| 5 | Maisstärke 2 | Nassverfahren | | 036 | 2400 mg/kg |
| 6 | Maisstärke 2 | | Nassverfahren | 0,29 | 450 mg/kg |
| 7 | Maisstärke 2 | Nassverfahren | | 0,22 | 630 mg/kg |
| 8 | Maisstärke 2 | | Nassverfahren | 0,16 | 290 mg/kg |
| 9 | Maisstärke 3 | Trockenverfahren | | 0,42 | 330 mg/kg |
| 10 | Maisstärke 3 | | Trockenverfahren | 0,29 | 130 mg/kg |
| 11 | Kartoffelstärke 2 | Nassverfahren | | 0,41 | 910 mg/kg |
| 12 | Kartoffelstärke 2 | | Nassverfahren | 0,31 | 100 mg/kg |

Aus Tabelle 1 kann ersehen werden, dass bei sämtlichen Versuchen, die gemäß dem Verfahren der vorliegenden Erfindung durchgeführt wurden, der Gesamtstickstoff nach Kjeldahl nach der erfindungsgemäßen Aufreinigung niedriger als jener bei einer Aufreinigung gemäß dem Stand der Technik ist, ebenso wie der Gehalt an unlöslichen Substanzen in der Trockensubstanz gegenüber dem Verfahren gemäß dem Stand der Technik deutlich, in manchen Fällen sogar um etwa 90 % abgesenkt werden konnte.

Die so hergestellten, gereinigten, derivatisierten Stärken wurden in der Folge in Dickstoff, in Dünnstoff sowie Leimungsmittel in den nachfolgenden Konzentrationen bzw. unter folgenden Bedingungen eingesetzt und mögliche Verbesserungen sowie Einsparungen an Chemikalien untersucht.

Beispiele:
Anwendung im Dickstoff:
Die derivatisierte Stärke hoher Reinheit, insbesondere Maisstärke, Kartoffelstärke oder Mischungen davon, die kationisch, anionisch oder amphoter eingesetzt werden kann, wird in der Masse im Dickstoff im Konsistenzbereich von 3 bis 35 Gew.-% (entspricht 30 bis 350 g Zellstoff atro/l Wasser), insbesondere 4 - 30 Gew.-% in einer Menge von 0,05 - 2,5 % bezogen auf den trockenen Zellstoff bzw. das Papier zur Erhöhung der Papierfestigkeiten, insbesondere der Papiertrockenfestigkeiten aber auch zur Störstofffixierung eingesetzt. Die Anwendung, die bei pH Werten von 5 bis 9, gegebenenfalls unter Beimengung von anderen Prozess-Hilfsstoffen und Temperaturen von 30 bis 80 °C erfolgt wird im Regelfall durch Einsatz von bereits gemahlenem Faserstoff durchgeführt, welcher mit derivatisierter Stärke hoher Reinheit versetzt wird. Gegebenenfalls kann auch ungemahlener Faserstoff eingesetzt werden. Weiterhin kann der Faserstoff zuvor einer Hochkonsistenz- und/oder einer Mittelkonsistenz- und/oder einer Niederkonsistenzmahlung (Faserstoffgehalte: Hochkonsistenz Mahlung: 20 - 35 %, Mittelkonsistenzmahlung: 10 - 20 %, Niederkonsistenz Mahlung: 3 - 10 %) unterworfen worden sein.
Dadurch, dass derivatisierte Stärke hoher Reinheit im Dickstoff eingesetzt wurde, gelingt es die Menge an erforderlichem Aluminiumsulfat um etwa 30 % zu verringern, da einerseits auf den speziellen gewünschten Einsatzzweck angesäuerte Stärke eingesetzt werden konnte (aufgrund der On-Site Herstellung der derivatisierten Stärke hoher Reinheit) und andererseits war nur der Zusatz von deutlich verringerten Mengen an Entschäumer im Dickstoff erforderlich, was darauf zurückzuführen ist, dass der nicht Stärke-gebundene Stickstoffgehalt in der derivatisierten Stärke deutlich verringert werden konnte, wodurch das Schäumen auch ohne Zusatz von Entschäumer reduziert werden konnte.

### Anwendung im Dünnstoff

Die derivatisierte Stärke hoher Reinheit, insbesondere Maisstärke, Kartoffelstärke oder Mischungen davon, die kationisch, anionisch oder amphoter eingesetzt werden können, wird in der Masse im Dünnstoff im Konsistenzbereich von 0,15 - 3 %, insbesondere 0,18 - 2 % in einer Menge von 0,05 - 0,5 % bezogen auf den trockenen Zellstoff bzw. das Papier zur Erhöhung der Feinstoffretention und Störstofffixierung eingesetzt. Die Anwendung erfolgt bei pH Werten von 5 bis 8, Temperaturen 30 - 80 °C sowie gegebenenfalls unter Beimengen von weiteren Prozess-Hilfsstoffen.

Dadurch, dass eine derivatisierte Stärke hoher Reinheit im Dünnstoff eingesetzt wurde, gelingt es das Reaktionsverhalten zu verbessern und insbesondere kann das Siebwasser auf den optimalen, gewünschten pH-Wert eingestellt werden, wodurch einerseits die Feinstofffaserfracht kontrolliert werden kann und andererseits Einsparungen an Retentionsmitteln bewirkt werden können. Weiterhin war nur der Zusatz an verringerten Mengen eines Entschäumers im Dünnstoff erforderlich, was darauf zurückzuführen ist, dass der nicht Stärke-gebundene Stickstoffgehalt in der derivatisierten Stärke deutlich verringert werden konnte, wodurch das Schäumen auch ohne Zusatz von Entschäumer reduziert werden konnte.

### Anwendung im ASA-Leimungsverfahren

Die derivatisierte Stärken hoher Reinheit, insbesondere Maisstärke, Kartoffelstärke oder Mischungen davon, die kationisch, anionisch oder amphoter eingesetzt werden können, werden vorzugsweise in einem abgesäuerten Zustand mit einem pH Wert von 2 bis < 7 in der Herstellung von Emulsionen mit Leimungsmittel wie beispielsweise ASA (Alkenylbernsteinsäureanhydrid) eingesetzt. Hierbei werden die Stärken als Schutzkolloid in einer Menge von 0,05 - 0,3 % bezogen auf den trockenen Zellstoff bzw. Papier zur Herstellung einer stabilen Leimungsmittel-Emulsion eingesetzt. Die angewandten Temperaturen betragen max. 60 °C und die pH Werte liegen vorzugsweise bei maximal 8, bevorzugt maximal. 7, besonders bevorzugt im Bereich zwischen pH 2 und pH 7, da ansonsten mit Abbauprodukten von Seiten des Leimungsmittels zu rechnen ist, was in Summe ineffizient ist, und weiterhin ist die Bildung von Ablagerungen und Ablagern dieser Abbauprodukte an diversen Anlagenteilen in der Papiermaschine für den Betrieb der Papiermaschine ungünstig, da in diesem Fall eine Reinigung der Maschine unter Verwendung von Reinigungschemikalien notwendig sind.

Dadurch, dass eine derivatisierte Stärke hoher Reinheit eingesetzt wurde, gelingt es den pH-Wert auf einen möglichst niedrigen und somit idealen pH-Wert einzustellen, was verhindert, dass die Stärke hydrolysiert und somit eine bessere Leimungswirkung erreicht werden kann. Versuche haben hierbei gezeigt, dass bei Einsatz der derivatisierten Stärke hoher Reinheit Cobb-Werte nach ISO 535:2014 erreicht werden konnten, die jenen von herkömmlichen Leimungsverfahren entsprachen, bei welchen jedoch für das Erreichen der entsprechenden Cobb-Werte um wenigstens 10 % mehr ASA eingesetzt werden musste.

Bei jeder dieser Einsatzarten zeigte sich, dass bei Verwendung der erfindungsgemäß hergestellten, derivatisierten Stärke hoher Reinheit im Wesentlichen die Einsparung an Chemikalien, wie Aluminiumsulfat erreicht werden konnte und überdies bei dieser Verfahrensführung eine pH-Wert Einstellung der mit der Stärke behandelten Zellstofffasermischung unterbleiben konnte.

## Patentansprüche

1. Verfahren zur Herstellung von in der Herstellung von Papier oder Pappe anwendbarer derivatisierter Stärke hoher Reinheit, bei welchem ein Stärke-Rohstoff wenigstens folgenden Schritten unterworfen wird: einer Reinigung, Aufschlämmung, Derivatisierung, Verkleisterung, einer pH-Wert Anpassung, **dadurch gekennzeichnet, dass** eine nach den in einer beliebigen Abfolge ausgeführten Verfahrensschritten der Aufschlämmung und Derivatisierung erhaltene Aufschlämmung der derivatisierten Stärke der Reinigung durch Waschen und Konzentrieren in einer Vorrichtung gewählt aus einem Dekanter, Hydrozyklon oder Separatoren bei einem alkalischen pH-Wert unterworfen wird und dass die nach der Verkleisterung erhaltene gereinigte und verkleisterte, derivatisierte Stärke einem wenigstens einmaligen Versetzen mit verdünnter Säure unterzogen wird.

2. Verfahren nach Anspruch 1, **dadurch gekennzeichnet, dass** die Aufschlämmung aus derivatisierter Stärke in wenigstens zwei Schritten gereinigt wird, einem ersten alkalischen Waschschritt und einem zweiten Schritt eines Waschens und Konzentrierens der Aufschlämmung.

3. Verfahren nach Anspruch 1 oder 2, **dadurch gekennzeichnet, dass** der zweite Schritt das Waschen unter Zusatz von wenigstens einer Säure gewählt aus Mineralsäuren und/oder organischen Säuren und Einstellung des pH-Werts auf pH 7 bis 9 durchgeführt wird.

4. Verfahren nach einem der Ansprüche 1 bis 3, **dadurch gekennzeichnet, dass** die Aufschlämmung aus derivatisierter Stärke in der Reinigung auf einen Feststoffgehalt von 2 bis 42 Gew.-%, insbesondere 5 bis 35 Gew.-% konzentriert wird.

5. Verfahren nach einem der Ansprüche 1 bis 4, **dadurch gekennzeichnet, dass** die nach der Verkleisterung erhaltene gereinigte und verkleisterte, derivatisierte Stärke einem zweistufigen Ansäuern unterworfen wird.

6. Verfahren nach einem der Ansprüche 1 bis 5, **dadurch gekennzeichnet, dass** als Derivatisierung eine Kationisierung mit einer Base gewählt aus der Gruppe der Alkalihydroxide, wie beispielsweise NaOH, KOH, LiOH, der Alkalikarbonate, wie beispielsweise Na₂CO₃ oder Erdalkalioxide, wie beispielsweise CaO oder der Erdalkalihydroxide, wie Ca(OH)₂, insbesondere NaOH, einem Kationisierungsreagenz, insbesondere 3-Chloro-2-hydroxy-propyl-trimethylammoniumchlorid oder einem epoxidischen Kationiserungsreagens wie 2,3 Epoxy-propyl-trimethyl-ammoniumchlorid sowie gegebenenfalls weiteren Substitutionsreagenzien und fakultativen Hilfsstoffen gewählt aus Aktivatoren, wie Silikate, Kalziumoxid oder Kalziumhydroxid durchgeführt wird.

7. Verfahren nach Anspruch 6, **dadurch gekennzeichnet, dass** in der Kationisierung Natronlauge, insbesondere aus einer Zellstofferzeugung rezyklierte Natronlauge eingesetzt wird.

8. Verfahren nach einem der Ansprüche 1 bis 7, **dadurch gekennzeichnet, dass** die Kationisierung auf einen in der nachfolgenden Papier- oder Pappe-Herstellung erforderlichen Kationisierungsgrad zwischen 0,02 und 0,5, insbesondere einen Kationisierungsgrad zwischen 0,04 und 0,35 vorgenommen wird.

9. Verfahren nach einem der Ansprüche 1 bis 8, **dadurch gekennzeichnet, dass** als Stärke-Rohstoff eine native Stärke gewählt aus Knollenstärke, wie Kartoffelstärke oder Tapiokastärke, Getreidestärke wie Maisstärke, Wachsmaisstärke, Weizenstärke, Gerstenstärke, Reisstärke oder Fruchtstärke, wie Stärke aus Hülsenfrüchten oder Mischungen von zwei oder mehreren davon eingesetzt wird.

10. Verfahren nach einem der Ansprüche 1 bis 9, **dadurch gekennzeichnet, dass** die Stärke unmittelbar nach ihrer Derivatisierung in einer Holzstoff-, Zellstoff-, Papier- oder Kartonherstellung eingesetzt wird.

## Claims

1. Method for producing high-purity derivatised starch which can be used in the manufacture of paper and cardboard in which method a starch raw material is subjected to at least the following steps: purification, slurrying, derivatisation, gelatinisation, pH adjustment, **characterized in that** a slurry of the derivatised starch obtained after the slurrying and derivatisation method steps carried out in any sequence is subjected to purification by washing and concentrating in a device selected from a decanter, hydrocyclone or separators at an alkaline pH and that the purified and gelatinised derivatised starch obtained after gelatinisation is mixed at least once with dilute acid.

2. Method according to claim 1, **characterized in that** the slurry of derivatised starch is purified in at least two steps, a first alkaline washing step and a second step of washing and concentrating the slurry.

3. Method according to claim 1 or 2, **characterized in that** the second step of washing is carried out by adding at least one acid selected from mineral acids and/or organic acids and setting the pH to pH 7 to 9.

4. Method according to any one of claims 1 to 3, **characterized in that** in the purification the slurry of derivatised starch is concentrated to a solid content of 2 to 42 wt.%, in particular 5 to 35 wt.%.

5. Method according to any one of claims 1 to 4, **characterized in that** the purified and gelatinised derivatised starch obtained after the gelatinisation is subjected to a two-stage acidification.

6. Method according to any one of claims 1 to 5, **characterized in that** as derivatisation, a cationisation is carried out with a base selected from the group of alkali hydroxides such as, for example, NaOH, KOH, LiOH, alkali carbonates such as, for example, Na₂CO₃ or alkaline earth oxides such as, for example, CaO or alkaline earth hydroxides such as Ca(OH)₂, in particular NaOH, a cationisation reagent, in particular 3-chloro-2-hydroxy-propyl-trimethylammonium chloride or an epoxidic cationisation reagent such as 2,3 epoxy-propyl-trimethyl-ammonium chloride and optionally further substitution reagents and optional adjuvants selected from activators such as silicates, calcium oxide or calcium hydroxide.

7. Method according to claim 6, **characterized in that** sodium hydroxide solution, in particular sodium hydroxide solution recycled from a pulp production, is used in the cationisation.

8. Method according to any one of claims 1 to 7, **characterized in that** the cationisation is performed to a degree of cationisation between 0.02 and 0.5, in particular a degree of cationisation between 0.04 and 0.35 required in the subsequent paper or cardboard production.

9. Method according to any one of claims 1 to 8, **characterized in that** a native starch selected from bulbous starch such as potato starch or tapioca starch, cereal starch such as maize starch, waxy maize starch, wheat starch, barley starch, rice starch or fruit starch such as starch from legumes or mixtures of two or more thereof is used as starch raw material.

10. Method according to any one of claims 1 to 9, **characterized in that** the starch is used immediately after its derivatisation in wood pulp, pulp, paper or cardboard manufacture.

## Revendications

1. Procédé de fabrication d'amidon dérivé de grande pureté pouvant être utilisé dans la fabrication de papier ou de carton, dans lequel une matière première d'amidon est soumise au moins aux étapes suivantes : une purification, une mise en suspension, une dérivatisation, une gélatinisation, un ajustement de pH, **caractérisé en ce qu'**une suspension obtenue selon les étapes de procédé de mise en suspension et de dérivatisation exécutées dans une quelconque séquence de l'amidon dérivé est soumise à la purification par lavage et concentration dans un dispositif choisi parmi un décanteur, un hydrocyclone ou des séparateurs à un pH alcalin et que l'amidon dérivé purifié et gélatinisé obtenu après la gélatinisation est soumis à un mélange au moins une fois avec de l'acide dilué.

2. Procédé selon la revendication 1, **caractérisé en ce que** la suspension d'amidon dérivé est purifiée en au moins deux étapes, une première étape de lavage alcalin et une deuxième étape de lavage et de concentration de la suspension.

3. Procédé selon la revendication 1 ou 2, **caractérisé en ce que** la deuxième étape du lavage est effectuée en ajoutant au moins un acide choisi parmi des acides minéraux et/ou des acides organiques et en réglant la valeur de pH sur un pH 7 à 9.

4. Procédé selon l'une des revendications 1 à 3, **caractérisé en ce que** la suspension d'amidon dérivé est concentrée dans la purification sur une teneur en solides de 2 à 42 % en poids, en particulier de 5 à 35 % en poids.

5. Procédé selon l'une des revendications 1 à 4, **caractérisé en ce que** l'amidon dérivé purifié et gélatinisé obtenu après la gélatinisation est soumis à une acidification en deux étapes.

6. Procédé selon l'une des revendications 1 à 5, **caractérisé en ce qu'**est effectuée, comme dérivatisation, une cationisation avec une base choisie dans le groupe des hydroxydes alcalins, par exemple le NaOH, KOH, LiOH, des carbonates alcalins, par exemple le Na₂CO₃ ou des oxydes alcalino-terreux, par exemple le CaO ou des hydroxydes alcalino-terreux, tels que le Ca(OH)₂, en particulier le NaOH, un réactif de cationisation, en particulier le chlorure de 3-chloro-2-hydroxy-propyl-triméthylammonium ou un réactif de cationisation époxydique tel que le chlorure de 2,3 époxy-propyl-tri-méthyl-ammonium ainsi que, le cas échéant, d'autres réactifs de substitution et excipients facultatifs choisis parmi des activateurs, tels que les silicates, l'oxyde de calcium ou l'hydroxyde de calcium.

7. Procédé selon la revendication 6, **caractérisé en ce que** de la soude caustique, en particulier de la soude caustique recyclée à partir d'une production de pâte à papier, est utilisée dans la cationisation.

8. Procédé selon l'une des revendications 1 à 7, **caractérisé en ce que** la cationisation est réalisée à un degré de cationisation entre 0,02 et 0,5, en particulier un degré de cationisation entre 0,04 et 0,35, nécessaire dans la fabrication ultérieure de papier ou de carton.

9. Procédé selon l'une des revendications 1 à 8, **caractérisé en ce qu'**un amidon natif choisi parmi l'amidon de tubercule, tel que l'amidon de pomme de terre ou l'amidon de tapioca, l'amidon de céréales, tel que l'amidon de maïs, l'amidon de maïs ciré, l'amidon de blé, l'amidon. d'orge, l'amidon de riz ou l'amidon de fruits, tel que l'amidon provenant de légumineuses ou de mélanges de deux ou plusieurs d'entre eux est utilisé en tant que matière première d'amidon.

10. Procédé selon l'une des revendications 1 à 9, **caractérisé en ce que** l'amidon est utilisé immédiatement après sa dérivatisation dans une fabrication de pâte à bois, de pâte à papier, de papier ou de carton.
